# EUROPEAN PATENT APPLICATION

(11) **EP 1 317 126 A2**
(43) Date of publication of application: **04.06.2003**
(21) Application number: 02257845.4
(22) Date of filing: 13.11.2002
(51) Int. Cl.: H04N 1/00

(54) **Method and system of network image scanning**

(30) Priority: 29.11.2001 RU 2001132215
(71) Applicant: SAMSUNG ELECTRONICS CO., LTD., Suwon-City, Kyungki-do (KR)
(72) Inventor: Alikberov, Ilmir Rasikovich, Moscow 105122 (RU); Gushcho, Mikhail Yurievich, Moscow 117261 (RU); Kim, Valery Romanovich, Zhukovsky Region, Kaluga District 378053 (RU); Smirnov, Dmitry Evguenyevich, Volzhsky, Volgograd District 344088 (RU)
(74) Representative: Parkinson, Neil Scott

(57) **Abstract**

System and method for network scanning of images with use of a scanner connected to a server, with the subsequent transfer of the scanned images to a user computer. The standard TWAIN technology process of scanning is used. The control (management) of the scanner or other image input devices (IID) connected to the scanning server, is provided with the help of the virtual TWAIN-driver which interacts with the application installed on the user computer. For image data and service information transfer within the network the transport protocol is used. The data structures containing information used in the course of connection (connection session) between the user and the server, are stored in the computers memory. Also, the computers memory is used for buffering and storage of transmitted information and package headings of the transport protocol.

## Description

The present invention relates to methods and systems of image scanning, more particularly, it relates to methods of scanning of images in a computer network, where the scanner is connected to one computer of the network, and other computers of the same network have access to this device.

"Scanner", in the sense of the present application, is a scanner *per se,* a digital camera or any other device, which can be connected to a computer and is capable of transfering graphic images to the computer.

Scanners, as a rule, are supplied with software which enables the scanner to reproduce graphic images. However, known versions of such software allow the scanner to be used with one only computer, i. e. the computer to which this scanner is connected. Thus, the problem is to provide a computer network with the facility for sharing of the scanner by several users, i.e. a problem of network scanning.

The known technical solutions related to sharing scanners or other image or text reading devices such as, for example, fax machine (see, in particular, WIPO publication WO97/45999 " System of Sequence Arrangement and Transmission of Facsimile Documents " [1] or published application US 96/13790 " Facsimile System for Internet " [2]) contribute, practically, nothing to overcoming the problems identified below.

One of the basic problems of network scanning is the multistage nature of the scanning process which includes evaluation of the scanner facilities, set up of scanning parameters and actually scanning. In the absence of an exclusive right to use the scanner, a conflict of interests is inevitable, such as when one user enters commands affecting the process of scanning initiated by another user.

Thus, it is necessary to solve a task of " scanner capture", i.e. to provide exclusive access to the scanner by a sole user for the whole period of scanning. In [2] the task of capture is solved only partially, describing the facsimile interface including a circuit for determination of the fax machine status - "free" or "engaged". As for the remote adjustment of the scanning parameters, the citation [1] refers only to the remote control of a sequence of pages in a multi-page document to be transmitted by the fax machine.

Another problem of network scanning arises in those cases where a scanner is engaged ("in use") by another user for an unreasonably long period of time. Other users can not get access to the scanner during this period. Thus, it is necessary to design a tool for breaking the connection between the first user and the scanner, and granting the opportunity of access to this scanner to other users.

Still another problem is connected with the fact that in network scanning the scanner could be located at a distance from the user. In controlling the process of scanning from the user computer, one can face the necessity to insert a document in the scanner, to initiate scanning from the computer and then to pick up the scanned document. These actions mean, at least, double travel of the user from the computer to the scanner and back. Thus, there is a task of providing the users with an opportunity of setting up the parameters of scanning and capture of the scanner from the user computer, with subsequent initialization of the scanning process from the server located close to the scanner.

Another problem of network scanning is connected the fact that a scanner, as a rule, is located beyond the range of visibility of the user. Therefore, the user faces difficulty in evaluation of the scanner status, while in the case of a dedicated scanner, its status can be verified visually or through the messages provided by the operational system or local software. Thus, the problem of alerting the user should be solved.

In a first aspect the present invention provides a method of network image scanning, comprising transfer of the image within a data transmission network from an image input device (scanner) connected to a primary computer (server), to user computers (user sites) within the data transmission network, which includes the following steps:
- accessibility to the server for image reception and transfer thereof within the network is registered;
- a virtual TWAIN-driver is installed at the user site;
- the virtual TWAIN-driver is associated with one of the scanners connected locally to the server;
- the image file is generated at the user site with the help of the general purpose application software comprising scanning functions (scanning software);
- TWAIN-commands from scanning software at the user site are transferred through the network to the local TWAIN-driver of the scanner;
- the resulting codes of TWAIN, image and other data are transferred through the network from the server to the user site.

Preferably, while the server is accessible, it can receive image data from local scanners for the subsequent retransmission of the image within the network.

Preferably, the process of the virtual TWAIN-driver installation includes the following steps:
- a concrete server is selected from the list of servers, accessible to the user, or IP-address of this server is specified;
- a concrete scanner is selected from the list of scanners connected to the concrete selected server;
- a virtual TWAIN-driver is installed at the user site, and the said virtual TWAIN-driver is associated with the selected concrete server using the local TWAIN-driver.

Preferably, the user scanning software which provides for image capture (generation) by means of the installed virtual TWAIN-driver, is used.

Preferably, the process of TWAIN commands transfer through the network includes the following steps:
- coding TWAIN commands generated by the scanning software, and transfer thereof from the user to the server;
- decoding the TWAIN commands received, and addressing necessary references to an appropriate local TWAIN-driver on the server;

Preferably, in the process of TWAIN commands coding, all TWAIN commands generated by the scanning software, including triplets and parameter structure, are coded into data packages (batches) of variable length, suitable to be transferred within the network.

Preferably, in the process of decoding TWAIN commands, the received packages (batches) are decoded and parameter structures are arranged according to TWAIN triplets; the said structures are filled in with the received data.

Preferably, the following steps are included in the process of transfer of resulting TWAIN codes, image and other data:
- coding the resulting codes and data returned by the local TWAIN driver of the server, and transferring them to the user;
- decoding the received resulting codes and data, and transferring them to the user scanning software.

Preferably, the process of resulting codes and data coding includes recording (coding) of the resulting codes, data and information regarding errors (if those took place) into data packages (batches) of variable length, suitable for transfer within the network.

Preferably, the process of decoding the received resulting codes and data includes decoding of the received data packages (batches) and filling in the structures generated by the scanning software, with the data received.

Preferably, a connection session is suspended immediately before the beginning of scanning to give the user time to get ready for scanning, and the confirmation from the user to start scanning is prompted by the server or the user computer;

Preferably, while the connection session is suspended, and in reply to the TWAIN command to start scanning, generated by the scanning software on the user computer, the user receives an invitation (is prompted); thereafter, the confirmation from the user is expected to be received either on the server or on the user site.

Preferably, in the course of data (image) transfer from the server to the user, the user has the option to suspend (interrupt) scanning.

Preferably, the option to suspend scanning includes display of an appropriate invitation on the user computer; if the user gives the command to suspend scanning, this command is transferred to the server; upon receipt of this command by the server, it suspends the process of scanning.

In another aspect the present invention provides a system intended for scanning images, comprising the facility of image transfer from the scanner, connected to the server, to the user computer within a data network, and containing:
- means of registration of server accessibility for recording images and transferring them within the network;
- virtual TWAIN-driver installed at the user site (on the user computer), and means of association of the virtual TWAIN-driver with one of the scanners connected locally to the server;
- scanning software on the user computer;
- means of transfer of TWAIN commands from scanning software on the user computer to the local TWAIN-driver of the server within a network;
- means of transfer of resulting TWAIN codes, images and other data from the server to the computer within a network.

Preferably, the means of registration on the server include the facility for recording images from local scanners for subsequent transmission of the images within the network.

Preferably, in the system:
- facilities for installation of the virtual TWAIN-driver on the user computer allow to select the concrete server from the list of accessible servers or to specify IP-address of this server;
- facilities for installation of the virtual TWAIN-driver on the user computer allow to select the concrete scanner from the list of the scanners connected to the selected concrete server;
- facilities for installation of the virtual TWAIN-driver on the user computer associate the virtual TWAIN-driver with the selected concrete server connected to the selected scanner.

Preferably, in the system:
- the means of TWAIN commands transfer within the network perform coding and transfer of all TWAIN commands generated by the scanning software, from the user computer to the server;
- the means of TWAIN commands transfer within the network perform decoding of TWAIN commands received and provide for necessary access to the appropriate local TWAIN-driver on the server.

Preferably, the means of transferring TWAIN commands within the network perform coding of all TWAIN commands generated by the scanning software, including triplets and parameter structure, into data packages (batches) of variable length, suitable to be transmitted within the network.

Preferably, the means of TWAIN commands transfer within the network perform decoding of the received data packages (batches) and arrange parameter structures according to TWAIN triplets; fill in these structures with the received data.

Preferably, in the system:
- the means of transfer of the resulting TWAIN codes, images and other data within the network perform coding and transfer of the resulting codes and data returned by the local TWAIN-driver on the server, to the user site;
- the means of transfer of the resulting TWAIN codes, images and other data within the network perform decoding of the received resulting codes and data, and transmit them to user scanning software.

Preferably, the means of transfer of the resulting TWAIN codes, images and other data within the network perform coding of the resulting codes, data and the information regarding errors (if those took place) into data packages (batches) of variable length, suitable to be transmitted within the network.

Preferably, the means of transfer of the resulting TWAIN codes, images and data within the network perform decoding of the received data packages (batches) and fill in structures provided by the scanning software, with the received data.

Preferably, it includes the means of suspension of a connection session immediately before the scanning starts to provide the user with an option to get ready for scanning and to issue the command, confirming scanning, to the server or to the user site.

Preferably, it includes the means, which, in case of suspension of the connection session and in reply to the TWAIN command, display, on the server or on the user computer, the invitation to the user to start scanning, generated by the scanning software on the user computer; thereafter, a confirmation by the user is expected either on the server or on the user computer.

Preferably, it includes the means, which, during image transfer from the server to the user, offer the user an opportunity to suspend scanning.

Preferably, it includes the means, which issue the invitation to the user; if the user gives the command to suspend scanning, this command goes to the server; upon receipt of this command by the server, the server suspends the process of scanning.

The technical solution described as the preferred embodiment in the present application, is aimed at overcoming the previously stated problems and on developing a method of scanning images and transmitting the scanned images, within the network, to a user computer, in which in the preferred embodiment of the present invention :
- no specific requirements to the scanner, except for the requirement to install a driver compatible with the standard specification, are necessary;
- for the period of scanning the user is granted the exclusive access to the scanner;
- the break of connection with the scanner is provided in cases where a current user maintains the connection with the scanner without making any actions during a specified period of time, such a break enables other users to establish connection with the scanner;
- a user is provided with an opportunity of the scanning process initialization from the server in cases of preliminary "capture" of the scanner by a user;
- all diagnostic messages about the scanning process are accessible within the network.

These results are achieved due to the introduction of a certain sequence of operations to be effected at a user computer having access to the server computer connected with a scanner, and also due to a specific configuration of the system comprising, at least, server and user computers, a scanner and communication lines (network). For normal functioning of the system one is supposed to use a standard software supplied, as a rule, together with the components of the system.

On the user computer, for interaction with the application program, the virtual driver of the scanner (virtual TWAIN-driver) is engaged. Thus, *modus operandi* of the application program does not depend on whether the scanner is connected locally to the user computer, or it is connected to the server to which the user computer is connected within a network.

The virtual TWAIN-driver is installed in such a manner that it interacts with the program of the TWAIN-server installed on the server computer. For transfer of TWAIN-commands, diagnostic and other data between the user computer and server computer the protocol further described is engaged.

In turn, on the server computer, the TWAIN-server program interacts with the local TWAIN-driver of the scanner. In relation to the local TWAIN-driver, the TWAIN-server represents a user program.

Thus, a channel is formed, on which TWAIN-commands and data are transferred between the application program installed on the user computer and the local TWAIN-driver installed on the server computer. Due to this kind of arrangement all messages regarding errors, generated by the local TWAIN-driver on the server computer, are transferred to the application program on the user computer.

The channel of connection (session) between the virtual TWAIN-driver on the user computer and TWAIN-server on the server computer is activated by issuing the command for opening the image input device (IID), the command being issued by the application program to the virtual TWAIN-driver on the user computer, thus the TWAIN-server on the server computer opens appropriate local IID. The channel of connection (session) between the virtual TWAIN-driver on the user computer and the TWAIN-server on the server computer is deactivated (closed) by issuing the command for closing the IID, the command being issued by the application program to the virtual TWAIN-driver on the user computer, thus the TWAIN-server closes the appropriate local IID

The server computer is adjusted in such a manner that while the channel of connection (session) with the user computer is activated, the server computer denies access for other user computers. As a rule, the connection session lasts till the user computer issues the command for suspension of the session. Nevertheless, for more rational use of network opportunities the adjustment procedure for the server computer includes the input of the parameter of the maximal idle period (time-out). In case during this fixed period of time (interval) no commands go from the user computer to the TWAIN-server, the TWAIN-server may independently terminate the connection session with the user computer and to close appropriate local IID, offering, to other users, an opportunity to activate the connection channel of their own (to begin a session) and to open appropriate local IID.

At a stage, when the application program, on the user computer, sends, to the virtual TWAIN-driver, the command to start scanning, the virtual TWAIN-driver displays, on the screen, "ready for scanning' message and requests confirmation of the command by the user. Simultaneously, on the server computer, the TWAIN-server displays on the screen a similar message and waits for the confirmation from the user. Such confirmation comes through the user computer or server computer, and the process of scanning starts.

The user is provided with an opportunity to adjust parameters of scanning from the user computer, then to place the originals in the scanner connected to the server computer, to initiate scanning from the server computer, and to take away the scanned originals upon termination of scanning. Thus, the problem of the complete control of the network device and originals by the user is solved, the problem of repeated travels of the user from the user computer to the scanner and back is also excluded or minimized.

The system solution for practical implementation of the described method of network scanning, is supposed to comprise two or more computers connected by means of a local or global computer network. Some of these computers are connected to one or several IDD (scanners, digital cameras etc.). Such computers, if they are capable of sharing their devices with other computers, fulfill the function of servers. Other computers capable, by means of a computer network to use devices, connected to servers, are called "user computer" or "users" of the said servers. Users also can be provided with the connection to IID, however, unlike servers, such devices are accessible from these computers only.

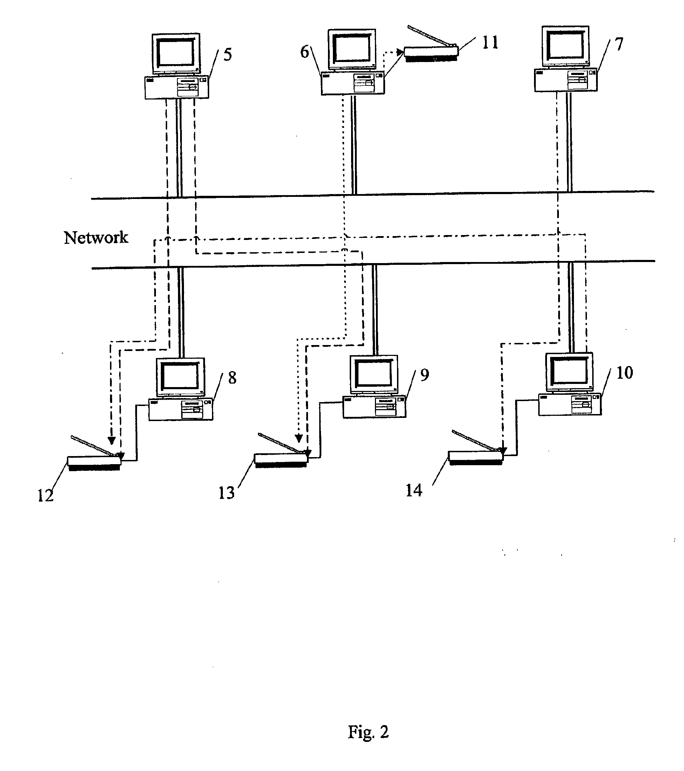

The described system allows presence of unlimited number of user and server computers in a network. and the same computer can be the user and server simultaneously. Thus, a user, it can use IID of other servers, and, being also by server, makes its devices accessible for other users. The interaction between these computers, i.e. which computers are users of which servers, are determined by configuration of the system, adjusted on each individual computer included in the system. The main distinctive feature of the described system is the establishment (at hardware and software levels) of direct connection between the user computer and IID controlled by any of server computers. The example of an operational configuration of a network scanning system is reproduced in Fig. 2.

For a better understanding of the invention, and to show how embodiments of the same may be carried into effect, reference will now be made, by way of example, to the accompanying diagrammatic drawings in which:

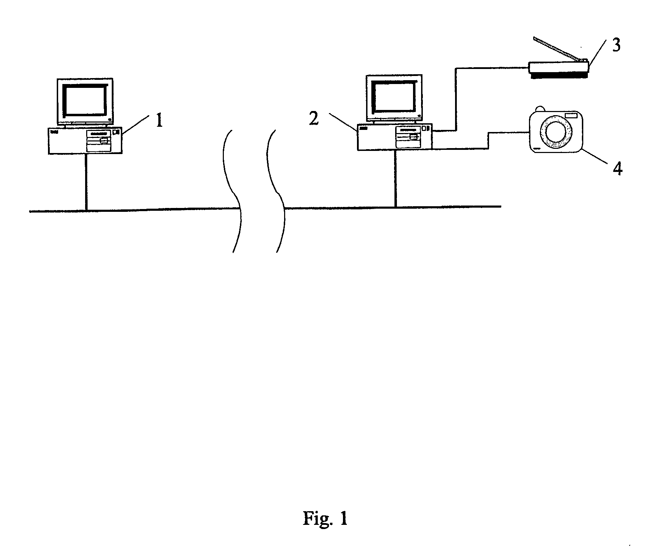

Fig.1. A simple configuration of a network scanning system. The system consists of user and server computers, comprising the following elements:
   1 - user;
   2 - server;
   3 - scanner;
   4 - digital camera.
Fig. 2. An example of a possible configuration of a network scanning system, where
   5 - user #1;
   6 - user #2;
   7 - user #3;
   8 - server #1;
   9 - server #2;
   10- servers - users;
   11- local scanners;
   12- scanners #1;
   13- scanners #3;
   14- scanners #3;
   Line "A" - servers #1 and #2 are engaged by user #1;
   Line "B" - local scanner and server #2 are engaged by user #2;
   Line "C" - "server-user" engages server #1 and shares the local scanner with user #3.

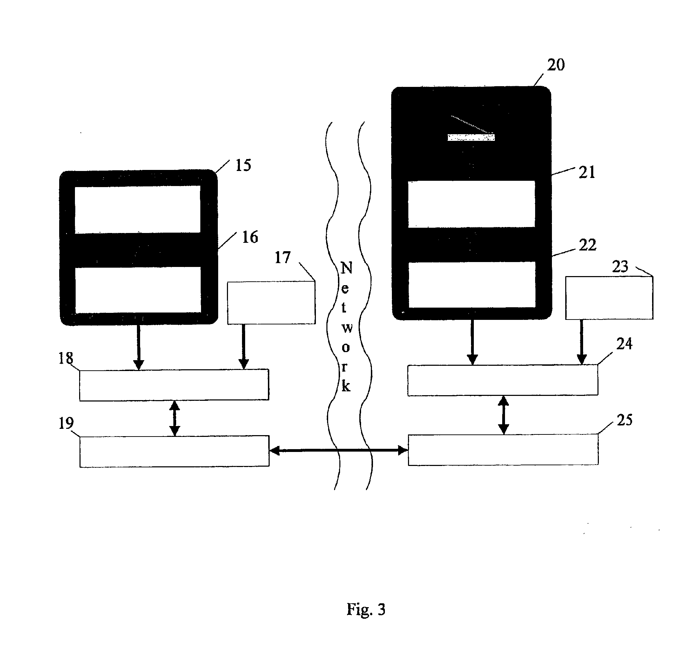

Fig. 3. Interaction of program modules used in the system, where
   15 - scanning software;
   16 - IID control module;
   17 - configuration module;
   18 - virtual TWAIN-driver;
   19 - transport module;
   20 - scanner;
   21 - local TWAIN-driver;
   22 - IID control module;
   23 - configuration module;
   24 - TWAIN-server;
   25 - transport module.

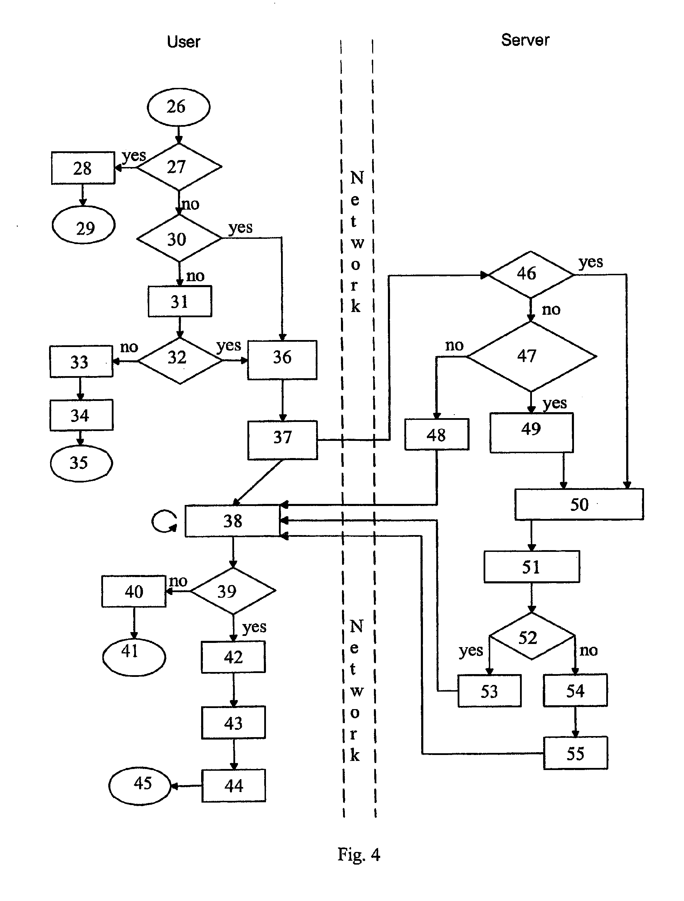

Fig. 4. The block diagram of interaction of the user and the server, where the following operations (steps) are designated:
   26 - the command has been received;
   27 - are all data available?;
   28 - to prepare a reply (OK);
   29 - return;
   30 - connected?
   31 - to fix connection;
   32 - connection OK?;
   33 - to display messages;
   34 - to prepare a reply (error);
   35 - return;
   36 - to prepare a package (batch) of command data;
   37 - to send a package (batch) of command data;
   38 - reply is due;
   39 - is reply received?;
   40 - to prepare a reply (error);
   41 - return;
   42 - to unpack the reply;
   43 - to memorize error code;
   44 - to prepare a reply;
   45 - return;
   46 - is the scanner free?;
   47 - is idle period (time-out) of connection with another user over?;
   48 - to prepare a reply (error);
   49 - to break off connection with another user;
   50 - to generate a parameter structure;
   51 - to contact local TWAN - driver;
   52 - was contact established?;
   53 - to prepare a reply (OK);
   54 - to request for the error code;
   55 - to prepare a reply (error).

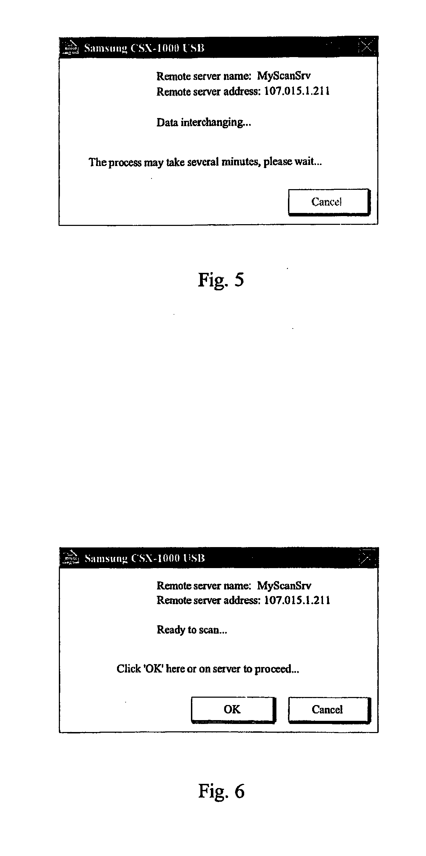

Fig.5. Information on the data exchange, displayed on the user computer.
Fig.6. Information on readiness for scanning, displayed on the user computer.

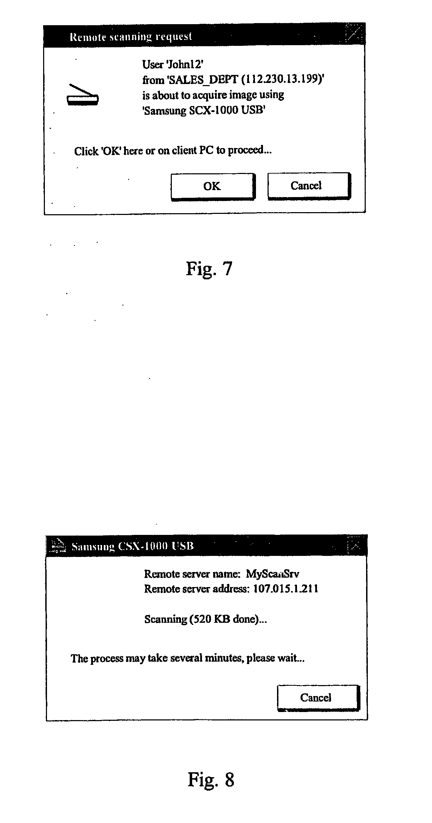

Fig.7. Information on readiness for scanning, displayed on the server computer.
Fig.8. Information on the status of scanning, displayed on the user computer.

The preferred embodiment of the present invention is realized in a system consisting of several (minimum two) computers connected by means of a local or global computer network and carrying out function of users and/or servers (see Fig. 2). In this example, image input devices (IID) like scanners 12, 13, 14 and/or digital cameras, are each connected to server computers 8, 9 and 10 (cameras are not shown in Fig. 2). User 6 is connected to IID - local scanner 11-, however, unlike servers, such IID only communicates with user 6, and is only accessible from his computer.

An embodiment, as shown in Fig. 2, allows the presence of unlimited number of user and server computers in a network. Computer 10 can act both as a user and a server at the same time. Furthermore, computer 10, acting as a user, can use IID of other servers, and, at the same time, acting as a server, offers its IID for use by other users. The interrelations between these computers, i.e. which computers are users, and which are servers, are determined by a system configuration which can be adjusted on each individual computer of the system. An example of a practical configuration of the network scanning system is shown in Fig. 2. Besides usual (in this case - local) network, users 5, 6 and 7 can, through temporarily activated communications (connection) channels A and B, transmit commands to any scanner connected to servers 8, 9 and 10, and to receive information (diagnostic and other data) from scanners 12, 13 and 14.

A diagram, representing the interaction of program modules used in the system, is shown as Fig. 3. This diagram shows that the software installed on the server comprises an IID TWAIN-driver (TWAIN source) 21, a module of IID control (TWAIN source manager) 22, a server scanning application (TWAIN-server) 24, a transport module 25 and a server configuration program (module 23).

The software installed on the user computer includes the virtual TWAIN-driver (virtual TWAIN source) 18, a module of IID control 16, a transport module 19 and a user configuration program (module 17), and also any scanning application 15.

The IID TWAIN-driver 21 is, usually, designed by the manufacturers of the hardware and, as a rule, is typically supplied with the scanner. This module is intended for transformation of TWAIN-commands into IID control (managing) commands, transfer of these commands to IID 20, reception of data from IID, and transfer of the received data to the requesting module.

The IID control module is a part of the operational system. This component is responsible for the interaction of the scanning applications and TWAIN-drivers. In preferred embodiments of the present invention, this module is used both on the server (for connection of the TWAIN-server to the IID TWAIN-driver), and on a user computer (for connection of the scanning application to the virtual TWAIN-driver).

The server scanning application (TWAIN-server) is intended for formation and performance of TWAIN-commands in compliance with user requests, and also for transmission of results to the users. Besides, the TWAIN-server provides processing of other user requests, in particular, for visualization of the graphic interface and interruption of scanning process. The TWAIN-server is, also, responsible for monitoring all connected users to disconnect those, who did not address the server within a specified period of time (time-out). Thereafter, the IID, previously engaged by such users, become accessible to other users.

The server configuration program is operable to enable users to use all IID connected to the computer, or to forbid such use, thereby transforming the server in the user. Furthermore, this program is intended for adding, removal and editing of the authorized IID user registry. It helps to deny access to IID for non-authorized users.

The user configuration program is intended for creation of virtual TWAIN-drivers in the system, each of which is associated with an individual IID, connected to on one of servers. The program provides for a free choice of the server from the list of servers, which are, automatically, detected in a local computer network, and also instruction (indication) of the server in a global network. Further, the program offers a free choice of IID from the list of the devices connected to the indicated (or selected) server. Besides, the program requires input of the identification information, which allows access to the server IID by the user. This program, also, allows to choose IID, enabled by default. The majority of the external (standard) scanning programs use IID by default.

The virtual TWAIN-driver is intended for formation, and transfer to the server, of inquiries in compliance with TWAIN-commands, required by the calling program, and also for reception, from the server, of results of performance of these commands and incorporation of these results in the calling program. Besides, the virtual TWAIN-driver provides for the graphic interface handling of the initialization and interruption of the scanning process, and also formation and transfer of the appropriate requests (commands) to the server.

The transport module engaged in the described arrangement, is a means of transfer of data packages (batches) between the user and the server within a computer network. This component provides for identification of the users and for authentic transfer of data packages of any length, without analyzing the contents of these packages. The transport module is used both on the server (TWAIN-server), and on the user computer (virtual TWAIN-driver).

Due to engagement of the virtual TWAIN-driver, an opportunity is provided for realization of embodiments of the present invention with any external application compatible with the TWAIN specifications and capable of scanning images without involvement of the TWAIN-driver for presentation of the user graphic interface in selecting a mode of scanning. It means, that the external scanning application should contain its own user interface for presentation of scanning modes supported by the device, and for selection of these modes.

The block diagram of user/server interaction in the system, is presented in Fig. 4.

Before the work starts, the software is adjusted with the help of the standard configuration module. On the server activate (enable) command, the mode providing the users with an opportunity of access to the connected IID is enabled on the server. Besides, it is necessary to create registration records for those users, who are authorized to use scanners. The records contain the identification information (name and password). Each of the thus registered users has an opportunity to use any IID connected to the server.

In the process of configuring the user computer, the new virtual TWAIN-driver associated with one of the IID connected to the server, is created. Furthermore, a general distribution inquiry is circulated within the local computer network, in response to which all servers, accessible at that moment, send, to the user, the information on devices connected to them. The described dialogue is carried out by the transport module which provides for the inquiry broadcasting, and also for connections between the user and the servers and for transfer of the data.

Then the user can choose the server and the device from the lists. The direct input of such server address (address TCP/IP, DNS name or other information authorizing connection) is provided for use of the scanner connected to the server outside the local computer network (or in other cases, when detection of a server with the help of the general inquiry fails). In such case, the inquiry is addressed to this server, only. Upon receipt of the response, the user also can choose the device from the list. At the end of the adjustment process, the user enters his personal data, i. e. the data which guarantees his unequivocal identification on the server (name and password). It should be noted, that actual authorization of the users takes place every time before the work session. This information is used for creation and registration, in the operational system, of the new virtual TWAIN-driver to be used later for interaction with associated IID on the server.

A scanning application interacts with the virtual TWAIN-driver associated with one of the IID on the server, and with the TWAIN-driver of the local device. It is performed by addressing to the functions of the IID control module.

The IID control module, in turn, transmits all calls (except for those addressed to this module directly) to the virtual TWAIN-driver. From the point of view of the IID control module (and also from the point of view of the scanning application), there are, absolutely, no distinctions in operation of the local and remote scanners.

In very rare cases (for example, DG_CONTROL/DAT_IDENTITY/MSG_GET or a DG_CONTROL/DAT_STATUS /MSG_GET) the virtual TWAIN-driver performs the command independently, without addressing to the server. It is made possible due to the fact that all necessary data were already received from the server (in the process of configuring the user or at performance of a previous command). In other cases the virtual TWAIN- driver establishes connection with the server (usually, in processing DG_CONTROL/DAT_IDENTITY/MSG_OPENDS) or uses an already established connection for transfer of the command. The process of establishing connection also includes authorization of the user, which step is carried out by the transport module. Whenever connection is impossible (owing to inaccessibility of the server or denial of access to the user) the virtual TWAIN-driver displays the appropriate message and returns control (management) functions to the calling application, indicating the code of the error. At a successful establishment of connection, and also in cases where connection was already established, the driver sends the command data package to the server with the help of the transport module.

The data package includes the triplet of the command, and also all meaningful fields of the data parameter structure (if the TWAIN-specification stipulates it). And instead of empty files intended for reception of information from the scanner, only references to them (file size) is transferred. It helps to minimize the volume of the transmitted information. After the data package is transmitted the virtual TWAIN-driver awaits the feed-back from the server during a specified period of time, upon expiration of which, if the response is not received, it displays the appropriate message and returns control (management) to the calling application together with the code of the error.

The user transport module 19 transfers the data package, unchanged, to the server. In turn, the server transport module 25, having received the data, transfers them to the server scanning application (TWAIN-server). The presence of the dedicated transport module allows, in the future, to introduce additional coding and (or) compression of transmitted data without modification of other components of the invention.

Having received a command addressed to one of the input/output devices, the server scanning application (TWAIN-server) verifies that an appropriate device is not engaged by another user (User-2). Otherwise, the TWAIN-server analyzes the time period which has expired from the moment of the previous command to the scanner, initiated by User-2. In case the predetermined time period (time-out) is exceeded, the TWAIN source will be closed, and the connection with User-2 will be compulsory disabled. If the time-out is not exceeded, the TWAIN-server will generate "reply-error", without addressing to the IID control module. This mechanism is a simple method to settle collisions on top, in relation to the TWAIN-subsystem, level. If the device is free, the TWAIN-server 24 forms a command and unequivocally reconstructs the structure of its parameters from the data package received. And, if some fields contain references to empty files, these files will be created. It results in reproduction, on the server, of the parameters structure identical to the structure addressed to user driver. These parameters and the command triplets are used by the TWAIN-server for addressing to the IID control module. At addressing to the IID control module (TWAIN source manager) the TWAIN-server follows the TWAIN specification. Therefore processing of the incoming commands from a user does not differ from similar commands from other scanning applications.

The commands are transferred in TWAIN to the driver of an appropriate device, which, if necessary, cooperates with IID. Upon completion of the command performance, the result goes back to the server scanning application. At this stage, depending on the command type, the contents of the data structure transmitted as a parameter can be amended: the file is recorded, or the indexes dealing with the newly created data structures are initiated, etc.

The server scanning application forms the reply data package which includes the result of the command performance (feed-back value), and also the data structure, in case it had been changed as a result of the command performance. Besides, the TWAIN-server analyzes the feed-back value and, in case of an error, addresses the control module to obtain the error code. The error code is also included in the data package. This allows the avoidance of repeatedly addressing the server, if the external scanning application on the user computer requests this code. The reply data package is transmitted with the help of the transport module on the server.

Having received the reply, the virtual TWAIN - driver fills in the parameters data structure with the information received, and returns the control functions along with the received code of the command performance. The error code is stored for possible subsequent use. If the successfully executed command was the command DG_CONTROL/DAT_IDENTITY/MSG_CLOSEDS, the virtual TWAIN - driver breaks connection with the server. It follows from the above, that the user is, usual, connected to the server from the moment the command DG_CONTROL/DAT_IDENTITY/MSG_OPENDS starts to be executed till the processing termination, i.e. till the command DG_CONTROL/DAT_IDENTITY/MSG_CLOSEDS.

The described arrangement for commands processing is of a general nature and does not depend on a command type, except for quantity of the data transmitted from the user to the server and from the server to the user. However, for easy monitoring of scanning and for the convenience of use, the virtual TWAIN - driver and the server scanning application provide the necessary user interface during this stage.

Thus, the virtual TWAIN - driver displays the information on the progress of the work from the moment of connection to the server till termination of this connection (Fig. 5). And, upon receipt of the command to start scanning (DG_CONTROL/DAT_USERINTERFACE/MSG_ ENABLEDS), the user is provided with an opportunity to initiate scanning or to refrain from this step (Fig. 6). Only after the user acknowledgement is received, is the "START SCANNING" command transferred to the server. The abortion of scanning results in receiving the feed-back message, accompanied by the error code, without addressing the server.

A similar information - "START SCANNING" - with the same options for selection, is also displayed on the server (Fig. 7). It is done by means of transmission of the service command "to show window START SCANNING" to the server. Thereafter, the virtual TWAIN - driver awaits for the user input either on the user computer or on the server computer, periodically interrogating the server by means of the service command "USER CHOICE". As soon as the user makes his choice on the server, the information window on the server becomes closed, the user receives the appropriate reply and can start working, i.e. the procedure is the same as in making the choice on the user computer. If the choice occurs on the user computer, the service command - "CLOSE START SCANNING WINDOW"- is sent to the server.

In the course of scanning (up to the command - DG_CONTROL/DAT_USERINTERFACE/MSG_DISABLEDS), the virtual TWAIN - driver offers the user an opportunity to interrupt (suspend) the scanning process (Fig. 8). In this case, the service command "INTERRUPT SCANNING" is addressed to the scanner, upon processing of which, the server transmits an appropriate message to the IID control module.

The user and the server can also exchange with other service commands and appropriate responses to perform functions not being part of the given invention.

Embodiments of the present invention can be implemented for input of images from devices connected to computers operating in a local or global computer network. These implementations of the invention allow unlimited numbers of remote users to have access to a device locally connected to a computer within a network (provided that the device is engaged by one user at a time). Thus, the efficiency of the device exploitation and convenience in use of this device is increased.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of network image scanning, comprising transfer of the image within a data transmission network from an image input device connected to a primary computer, to user computers within the data transmission network, which includes the following steps:
- accessibility to the server for image reception and transfer thereof within the network is registered;
- a virtual TWAIN-driver is installed at the user site;
- the virtual TWAIN-driver is associated with one of the scanners connected locally to the server;
- the image file is generated at the user site with the help of the general purpose application software comprising scanning functions;
- TWAIN-commands from scanning software at the user site are transferred through the network to the local TWAIN-driver of the scanner;
- the resulting codes of TWAIN, image and other data are transferred through the network from the server to the user site.

2. A method as claimed in claim 1, **characterized in that**, while the server is accessible, it can receive image data from local scanners for the subsequent retransmission of the image within the network.

3. A method as claimed in claim 1 or claim 2, **characterized in that** the process of the virtual TWAIN-driver installation includes the following steps:
- a concrete server is selected from the list of servers, accessible to the user, or IP-address of this server is specified;
- a concrete scanner is selected from the list of scanners connected to the concrete selected server;
- a virtual TWAIN-driver is installed at the user site, and the said virtual TWAIN-driver is associated with the selected concrete server using the local TWAIN-driver.

4. A method as claimed in any one of the above claims, **characterized in that** the user scanning software which provides for image capture by means of the installed virtual TWAIN-driver, is used.

5. A method as claimed in any one of the above claims, **characterized in that** the process of TWAIN commands transfer through the network includes the following steps:
- coding TWAIN commands generated by the scanning software, and transfer thereof from the user to the server;
- decoding the TWAIN commands received, and addressing necessary references to an appropriate local TWAIN-driver on the server;

6. A method as claimed in claim 5, **characterized in that**, in the process of TWAIN commands coding, all TWAIN commands generated by the scanning software, including triplets and parameter structure, are coded into data packages of variable length, suitable to be transferred within the network.

7. A method as claimed in claim 5 or claim 6, **characterized in that**, in the process of decoding TWAIN commands, the received packages are decoded and parameter structures are arranged according to TWAIN triplets; the said structures are filled in with the received data.

8. A method as claimed in any one of the above claims, **characterized in that** the following steps are included in the process of transfer of resulting TWAIN codes, image and other data:
- coding the resulting codes and data returned by the local TWAIN driver of the server, and transferring them to the user;
- decoding the received resulting codes and data, and transferring them to the user scanning software.

9. A method as claimed in claim 8, **characterized in that** the process of resulting codes and data coding includes recording of the resulting codes, data and, if errors took place, information regarding errors into data packages of variable length, suitable for transfer within the network.

10. A method as claimed in claim 8 or claim 9, **characterized in that** the process of decoding the received resulting codes and data includes decoding of the received data packages and filling in the structures generated by the scanning software, with the data received.

11. A method as claimed in any one of the above claims, **characterized in that** a connection session is suspended immediately before the beginning of scanning to give the user time to get ready for scanning, and the confirmation from the user to start scanning is prompted by the server or the user computer;

12. A method as claimed in claim 11, **characterized in that**, while the connection session is suspended, and in reply to the TWAIN command to start scanning, generated by the scanning software on the user computer, the user receives an invitation; thereafter, the confirmation from the user is expected to be received either on the server or on the user site.

13. A method as in any one of the above claims, **characterized in that**, in the course of data transfer from the server to the user, the user has the option to suspend scanning.

14. A method as claimed in claim 13, **characterized in that** the option to suspend scanning includes display of an appropriate invitation on the user computer; if the user gives the command to suspend scanning, this command is transferred to the server; upon receipt of this command by the server, it suspends the process of scanning.

15. A system intended for scanning images, comprising the facility of image transfer from the scanner, connected to the server, to the user computer within a data network, and containing:
- means of registration of server accessibility for recording images and transferring them within the network;
- virtual TWAIN-driver installed at the user site, and means of association of the virtual TWAIN-driver with one of the scanners connected locally to the server;
- scanning software on the user computer;
- means of transfer of TWAIN commands from scanning software on the user computer to the local TWAIN-driver of the server within a network;
- means of transfer of resulting TWAIN codes, images and other data from the server to the computer within a network.

16. A system as claimed in claim 15, **characterized in that** the means of registration on the server include the facility for recording images from local scanners for subsequent transmission of the images within the network.

17. A system as claimed in claim 15 or claim 16, **characterized in that**
- facilities for installation of the virtual TWAIN-driver on the user computer allow to select the concrete server from the list of accessible servers or to specify IP-address of this server;
- facilities for installation of the virtual TWAIN-driver on the user computer allow to select the concrete scanner from the list of the scanners connected to the selected concrete server;
- facilities for installation of the virtual TWAIN-driver on the user computer associate the virtual TWAIN-driver with the selected concrete server connected to the selected scanner.

18. A system as claimed in claim 15, claim 16 or claim 17, **characterized in that**:
- the means of TWAIN commands transfer within the network perform coding and transfer of all TWAIN commands generated by the scanning software, from the user computer to the server;
- the means of TWAIN commands transfer within the network perform decoding of TWAIN commands received and provide for necessary access to the appropriate local TWAIN-driver on the server.

19. A system as claimed in claim 18, **characterized in that** the means of transferring TWAIN commands within the network perform coding of all TWAIN commands generated by the scanning software, including triplets and parameter structure, into data packages of variable length, suitable to be transmitted within the network.

20. A system as claimed in claim 18 or claim 19, **characterized in that** the means of TWAIN commands transfer within the network perform decoding of the received data packages and arrange parameter structures according to TWAIN triplets; fill in these structures with the received data.

21. A system as claimed in any one of claims 15 to 20, **characterized in that**
- the means of transfer of the resulting TWAIN codes, images and other data within the network perform coding and transfer of the resulting codes and data returned by the local TWAIN-driver on the server, to the user site;
- the means of transfer of the resulting TWAIN codes, images and other data within the network perform decoding of the received resulting codes and data, and transmit them to user scanning software.

22. A system as claimed in claim 21, **characterized in that** the means of transfer of the resulting TWAIN codes, images and other data within the network perform coding of the resulting codes, data and if errors took place, the information regarding errors into data packages of variable length, suitable to be transmitted within the network.

23. A system as claimed in claim 21 or claim 22, **characterized in that** the means of transfer of the resulting TWAIN codes, images and data within the network perform decoding of the received data packages and fill in structures provided by the scanning software, with the received data.

24. A system as claimed in any one of claims 15 to 23, **characterized in that** it includes the means of suspension of a connection session immediately before the scanning starts to provide the user with an option to get ready for scanning and to issue the command, confirming scanning, to the server or to the user site.

25. A system as claimed in any one of claims 15 to 24, **characterized in that** it includes the means, which, in case of suspension of the connection session and in reply to the TWAIN command, display, on the server or on the user computer, the invitation to the user to start scanning, generated by the scanning software on the user computer; thereafter, a confirmation by the user is expected either on the server or on the user computer.

26. A system as claimed in any one of claims 15 to 25, **characterized in that** it includes the means, which, during image transfer from the server to the user, offer the user an opportunity to suspend scanning.

27. A system as claimed in claim 26, **characterized in that** it includes the means, which issue the invitation to the user; if the user gives the command to suspend scanning, this command goes to the server; upon receipt of this command by the server, the server suspends the process of scanning.
